Europäisches Patentamt

European Patent Office

Office européen des brevets

(19)

(11) Publication number: **0 000 093**
**B1**

(12) **EUROPEAN PATENT SPECIFICATION**

(45) Date of publication of patent specification: **07.04.82**

(21) Application number: **78300022.7**

(22) Date of filing: **06.06.78**

(51) Int. Cl.³: **B 65 D 47/34,**
**A 47 J 41/02, G 01 F 11/08**

(54) **A pump dispenser for a vacuum bottle.**

(30) Priority: **06.06.77 US 803736**
**29.09.77 US 837519**

(43) Date of publication of application:
**20.12.78 Bulletin 78/1**

(45) Publication of the grant of the patent:
**07.04.82 Bulletin 82/14**

(84) Designated Contracting States:
**CH DE FR NL SE**

(56) References cited:
**DE - A - 2 237 518**
**DE - C - 144 412**
**FR - A - 1 014 150**
**US - A - 2 066 977**
**US - A - 3 162 324**
**US - A - 3 905 520**

(73) Proprietor: **ALADDIN INDUSTRIES,**
**INCORPORATED**
**1413 Merchandise Mart**
**Chicago, Illinois 60654 (US)**

(72) Inventor: **Frazier, Albert A.**
**2112 June Drive**
**Nashville, Tennessee 37214 (US)**
Inventor: **Phillips, Howard W.**
**998 Brentwood Lane**
**Brentwood, Tennessee 37027 (US)**

(74) Representative: **George, Roger David et al,**
**Raworth, Moss & Cook 36 Sydenham Road**
**Croydon Surrey CRO 2EF (GB)**

Courier Press, Leamington Spa, England.

# A pump dispenser for a vacuum bottle

This invention relates to the field of vacuum insulated containers of the type commonly referred to as vacuum flasks. More specifically, it relates to an improvement in vacuum flask construction whereby the need to remove a cap to dispense the liquid therefrom is avoided. Since the purpose of a vacuum flask is to maintain its contents at a desired serving temperature, either hot in the case of coffee and the like or cold in the case of soft drinks, it is desirable to maintain the integrity of the vacuum unit to prevent heat transfer.

Prior vacuum flask designs, whether wide mouth of narrow mouth in construction, usually require that a cap be removed and the bottle be tipped to some degree to pour the contents from the bottle. During this dispensing operation the insulating properties of the bottle are impaired. Another disadvantage of prior designs is that during pouring it is easy to spill the contents and if the liquid is hot, burns can result. The present invention provides a pump dispenser for insulated containers which, in use with an insulated container, avoids the necessity for pouring liquids from the container and which maintains the integrity of the pump dispenser and container in use. These objectives are accomplished by the provision of a pump dispenser as part of the vacuum bottle design. The dispenser is mounted on the top of the bottle in place of a cap and permits the dispensing of liquids from the heat insulating interior in response to manual pumping.

Pump units for vacuum bottles have been developed by others. The devices are highly complex employing a great number of components and being relatively more expensive to manufacture than the present invention.

In US—A—3,905,520 (Nishioaka) which relates to a vacuum flask provided with a pumping device, the pumping means is formed by the bellows, which define the air chamber, connected to a ring at its lower end and a metal element at its open other end. The metal element has a mouthpiece capped thereon. The pumping means is actuated by means of a swinging bar, an intermediate bar and pusher. A framework for the dispenser lid is essential for operation of a check valve. As the pusher is depressed, the check valve closes and remains closed during the downward stroke of the pusher and also during a major part of the upward stroke of the pusher. The check valve only opens to allow air to enter the bellows when the pusher has returned upwardly to a position in which the check valve is opened by once again directly contacting a lower member of the framework. Efficiency of operation is lost therefore because air is not entering the bellows during a major part of the return stroke of the pusher. Furthermore, the use of a check valve may eventually lead to mechanical failure of the dispenser. The capacity of air displaced by the pumping means on each downward stroke of the pusher is limited by the extent to which the bellows are evacuated. Inevitably, the bellows, with their concertina-like side walls, cannot be completely evacuated because there must be a residual volume of air in the bellows even in the fully depressed position of the pusher. Thus, the pumping efficiency of the dispenser is limited by the structure of the bellows.

DE—C—144,412 shows a dispenser mounted atop a container. The air space is defined by a deformable bulb actuated by the user's hand and including a button member with an aperture therein for entry of air. This allows air to fill the bulb. The bulb, which does not have a housing as such, sits atop passage defining means for the entry of air to the container which includes a one-way valve. Inevitably, the pumping efficiency of the dispenser is limited by the extent to which the bulb can be evacuated and clearly full evacuation is not possible, particularly when it is noted that the user must simultaneously close the aperture in the button and compress the bulb.

The present invention seeks to provide a pump dispenser which has mechanical reliability, simplicity of construction by avoiding mechanical actuation of the pumping means and greater volumetric pumping efficiency.

According to the present invention there is provided a pump dispenser for an insulated container having a pouring opening through which liquids pass into and out of the interior of the container, said pump dispenser being adapted to removably engage the container and seal the pouring opening to prevent heat loss and spilling, said dispenser comprising a pump housing (36) which is cylindrical and which defines an interior space (34) having at least one opening (42) in a bottom (41) of said housing (36) enabling, in use, said interior space (34) to communicate with the interior of said container (10), pumping means (18) including a rigid disc member (26) for pumping air from said interior space (34) into said container (10), a closable opening (32) in said pumping means (18) to permit air to enter the interior space (34) of the housing (36), and conduit means (24, 40, 22, 20) for permitting fluid to pass out of the container (10) in response to air pressure created therein as a result of the downward displacement of said pumping means (18) characterised in that said housing (36) defines an interior space (34) serving as an air chamber from which air is displaced and also defines an access opening (35a) extending across the top of the housing (36) for access of the user's finger to said pumping means (18), said pumping means (18) also comprises a rolling diaphragm (28), sealing off the top of said housing interior space (34), said disc member (26) underlying the area of said access opening (35a), said rolling diaphragm (28) having an inner portion (28a) underlying said rigid disc member (26) and movable therewith, an outer peripheral portion (29) attached to the housing (36) and an intermediate portion (28b) connecting said inner portion (28a) with said peripheral portion (29) for movement of the former relative to the latter, said inner portion (28a) of the diaphragm (28) and said disc member (26) being displaceable downwardly within said interior space (34) to evacuate air therefrom by pressure of the user applied by direct contact of the user's finger on the rigid disc member (26), said closable opening (32) being formed in register in said rigid disc member (26) and inner portion (28a) of the flexible diaphragm (28) and located therein so as to be capable of closure by the user's finger during downward strokes of the disc member (26), in use said downward strokes forcing the air from said interior space (34) into the container interior via said bottom opening (42) whereas, in use, during upward strokes of the rigid disc member (26) said closable opening (32) is uncovered by removal of the user's finger therefrom to permit air to be drawn into said interior space (34) to recharge the same.

Embodiments of the invention will now be described by way of example with reference to the accompanying drawings in which:—

Figure 1 is a perspective view of a thermos bottle and pump dispenser according to the invention.

Figure 2 is a cross sectional view of the pump dispenser according to the invention.

Figure 3 is a cross sectional view of the pump dispenser and thermos bottle showing the dispenser in its actuated position.

Figures 4 and 5 are enlarged sectional views of the lower portion of the pump dispenser illustrating operation of the gasket seal.

Figure 6 is a sectional view along the lines 6—6 of Figure 2.

Figure 7 is a sectional view along the line 7—7 of Figure 6.

Figure 8 illustrates the use of a pump unit according to the present invention on a non-vacuum insulated container of a larger size than the thermos bottle of Figure 1.

Figure 9 is a view similar to Figure 2 illustrating the use of a gasket according to a second embodiment of the invention.

Figure 10 is a sectional view similar to Figures 4 and 5 illustrating the operation of the gasket according to the second embodiment.

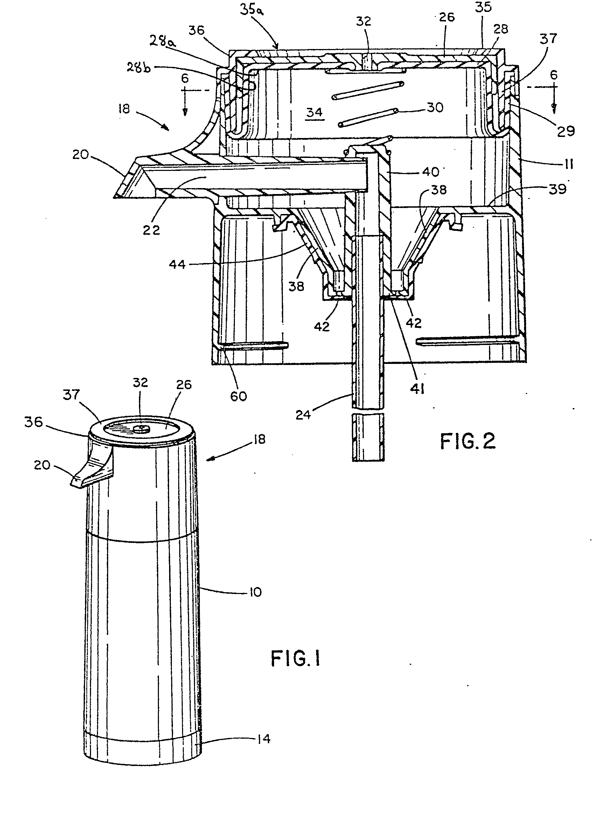

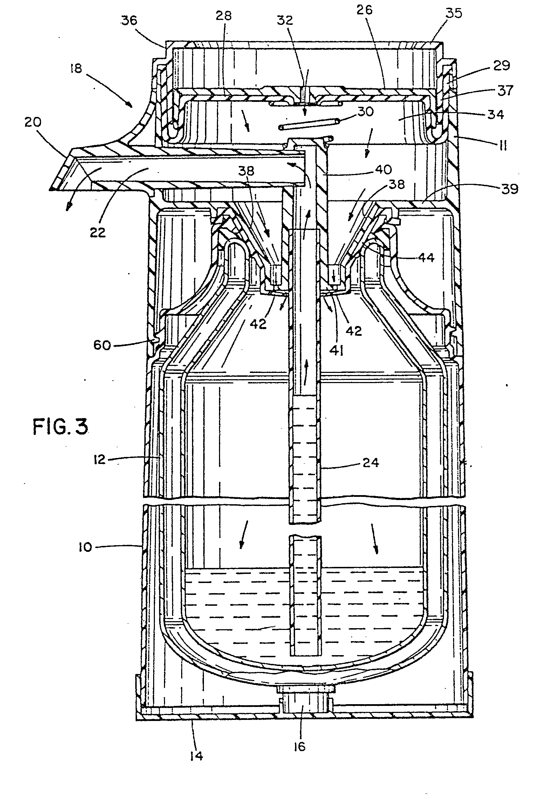

Referring to Figures 1, 2 and 3, the vacuum bottle and dispenser according to the invention are illustrated. The vacuum bottle, for the purpose of the present application, includes an outer jacket 10, a vacuum filler 12, a bottom cap 14 and a filler spacer 16 which positions the filler 12 in the jacket and protects the glass nipple through which air is withdrawn from the interior of the filler. In the embodiment illustrated in Figure 3 the filler is shown as being a narrow neck bottle, that is, one which tapers at its top to form a convenient pouring neck. As will be indicated, the pump dispenser according to the invention is also capable of being used with wide mouth bottles. A wide mouth bottle does not have the taper and, accordingly, the pump dispenser would have a dimensional change to correspond to the opening of the wide mouth filler.

The pump 18 includes a dispensing spout 20, a spout channel 22 and a fluid tube 24 which extends downwardly into the interior of the vacuum flask. In response to air being forced into the interior of the vacuum bottle from the pump, fluid passes upwardly through the tube 24 into the channel 22 and out of spout 20.

Air is forced into the interior of the vacuum flask by the manually operable pump portion of the unit which includes a disk 26, a flexible sealing member or rolling diaphragm 28 and a return spring 30. The disk 26 has an air port 32 located at its center for permitting the passage of air to an interior space 34 which is enclosed in part by the rolling diaphragm 28. The disk is retained in the position shown in Figure 2 by the inwardly directed flange 35 of a pump housing 36. The disk 26 and diaphragm 28 can, however, move vertically downward against the bias of a spring 30 to effect the pumping action to be described. The spring 30 urges the disk and diaphragm back to their initial positions when manual pressure on the disk is removed. The diaphragm 28, which as an outer peripheral portion 29 secured between an upper portion 11 of the jacket 10 and a downwardly depending portion 37 of the housing 36, effectively seals the upper portion of interior space 34 to make it airtight except for opening 32 in the disk. An inner portion 28a of the diaphragm 28 is secured to the disk by any suitable bonding technique. An intermediate portion 28b of the diaphragm connects the inner portion 28a with the peripheral portion 28b for movement of the former relative to the latter.

The lower portion of the space 34 is enclosed by a wall 39, a conical section 38, bottom 41, and a center post 40. The upper portion of the center post 40 provides a means for mounting the helical spring 30. Bottom portion 41 is provided with a number of openings 42 to permit the passage of air from the interior space 34 into the filler 12 in order to increase the air pressure on the surface of the liquid during pumping.

The number and size of the openings 42 depends upon the size of the pump unit and can be empirically determined for any given construction. In order to prevent liquid from entering the interior space 34 should the vacuum bottle be turned on its side or upside down a gasket 44 according to a first embodiment encompasses the conical section 38 and bottom 41 of the pump housing. When the pump is secured over the filler 12 the gasket engages the top of the filler 12 to provide a fluid seal between the filler top and the conical section 38.

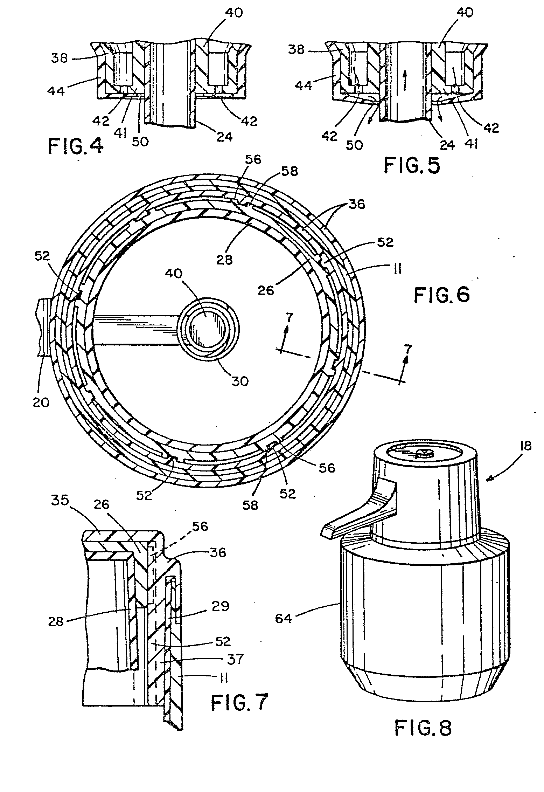

As best illustrated in Figures 4 and 5, the central portion of the gasket has an aperture therethrough to permit the fluid tube 24 to pass downwardly into the bottle interior. When the pump is not being operated the gasket is retained in close proximity to the junction of the housing and the fluid tube. This securely covers the openings 42 to prevent the passage of liquid upwardly from the vaccum bottle into the interior space 34 (Figure 4). When the pump dispenser is operated, however, the lower portion of the gasket flexes away from the housing and fluid tube, as indicated in Figure 5, due to the air pressure generated by the pump unit. This permits the air to pass through the openings 42 and around the gasket end 50 into the interior of the vacuum bottle. Upon completion of the pumping operation the gasket returns to its Figure 4 position to again seal the pumping unit.

Operation of the pump unit as thus far described is as follows. The unit is secured to a vacuum bottle or other container for liquids by securing it to the top in the manner illustrated in Figures 1 and 3. When it is desired to dispense fluid from the interior without the need for pouring or opening the container the index finger or thumb of the user is placed over the opening 32 of the disk 26 thereby sealing the pump interior 34. The user then applies downward pressure to the disk while maintaining the seal thereby forcing the air contained in the interior space 34 downwardly through the openings 42 into the interior of the vacuum bottle. This air pressure acts in a well understood manner to force the fluid in the container up the fluid tube 24 through the channel 22 and out of the spout 20 to a cup or glass, as desired. During pumping the gasket 44 alternately seals and unseals the openings 42 to prevent back flow of liquid while permitting entry of air to the container.

At the bottom of its travel the pump disk 26 is released by the user and the air port 32 in unblocked. This permits the return spring 30 to return the disk and the attached diaphragm 28 back to the initial position illustrated in Figure 2.

This also fills the interior 34 with air in preparation for the next pumping stroke.

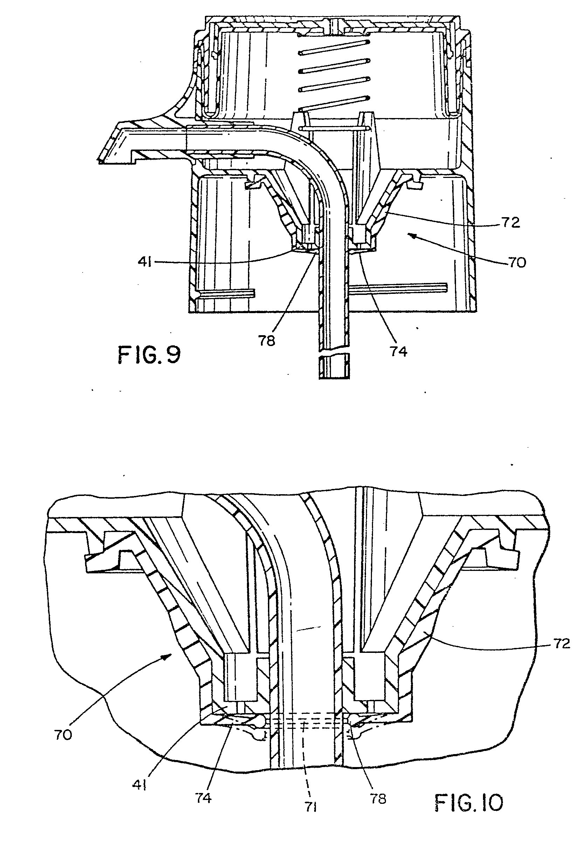

Referring to Figures 9 and 10, a sealing arrangement according to a second embodiment of the invention is illustrated. Unlike the Figure 1 embodiment, the gasket illustrated in Figures 9 and 10 is not in physical contact with the fluid tube 24. Instead, it is spaced slightly therefrom by virtue of having a slightly larger diameter aperture 71. The following dimensions are exemplary of the type of relationship between the outside diameter of the fluid tube and the diameter of the aperture through the bottom of the gasket:

| | |
|---|---|
| tube diameter | — 9.4 mm |
| | (0.37 inches) |
| gasket aperture | — 10.2 mm |
| | (0.40 inches) |

A gasket 70, according to the second embodiment, is provided with a relatively thick tapering wall 72 and a relatively thin bottom wall 74. The opening 71 through the bottom of the gasket is defined by a circular bead 78 of increased dimension as compared to the bottom wall 74. As illustrated in Figures 9 and 10, bead 78 is intended to normally maintain contact with the bottom portion 41 of the housing. The holes 42 through the bottom portion 41 are located on the side of bead 78 opposite the tube 24 so that the bead normally provides a sealing relationship to prevent liquid from entering the pump interior through the holes 42.

When air is pumped, by operation of the disk and diaphragm, the resulting air pressure causes a slight flexing of bead 78 away from bottom portion 41 permitting air to pass into the vacuum filler to dispense the liquid contained therein. As will be apparent, in order to operate properly, the gasket should be formed of a suitable material which will retain its initial shape so that it will return to the desired sealing position after each flexing away from the bottom of the housing. Many suitable materials are available for this purpose and exemplary thereof is the material sold under the trademark KRATON. As indicated in Figure 10, the underside of gasket bottom 74 may taper upwardly and reduce in thickness (as viewed from the edge) to improve the flexing capability of the bead. The angle of taper, as measured from the edge, may be on the order of 3°. While this arrangement does not seal the pump unit against liquid as securely as the first embodiment does, it has the advantage of substantially reducing the amount of pressure required to operate the pump unit. This is due to the ease with which the gasket beam can be caused to flex away from the housing bottom 41 as compared to the pressure required to pass air around the gasket illustrated in Figures 4 and 5.

Referring now to Figures 6 and 7, an important feature of this embodiment is illustrated. During the manual pumping operation there is a tendency for the pump disk 26 to wobble, twist or otherwise become angularly disoriented from its intended position. This does have a material effect on the pumping operation in that it increases the difficulty of operation and may cause the unit to jam. It is, therefore, desirable that the disk stay essentially perpendicular to the fluid tube during its movement between the Figure 2 and Figure 3 positions. In order to prevent this undesirable movement of the disk 26, the pump housing 36 is provided with a plurality of guide ribs 52 spaced around its circumference. The ribs extend vertically substantially the entire length of travel of the disk between the positions illustrated in Figures 2 and 3. The disk 26 is provided with a corresponding set of grooves defined by projections 56 and 58 which mate with the guide ribs 52. Thus, as the disk moves vertically, twisting movement of the disk is prevented by the projections tracking along the vertical length of the guide ribs. Large angular displacement of the disk is also generally avoided by employing these ribs since thie problem is in part caused by the twisting movement of the disk. Thus, the guide rib and groove arrangement provides a smoother and more efficient pumping operation than would otherwise be obtained.

As indicated in Figures 2 and 3, the pump unit may be provided with an internal thread 60 for engaging a mating thread on the jacket 10 of the vacuum bottle. The conical section 38 of the pump housing is dimensioned to securely seal on the filler opening so that as the threads are engaged the gasket 44 effects a good seal between the pump unit and the top of the filler. The threads 60 permit the pump housing to engage the vacuum bottle jacket quickly and conveniently to allow the pump unit to be attached to or removed from the vacuum bottle for cleaning and refilling purposes.

As mentioned earlier, this pump unit is designed for use with vacuum bottle or similar insulated containers, such as, foam bottles and the like. Figure 8 illustrates the use of a pump unit according to the invention in conjunction with a quart container 64 which may be of the foam type of similar construction.

**Claims**

1. A pump dispenser for an insulated container having a pouring opening through which liquids pass into and out of the interior of the container, said pump dispenser being adapted to removably engage the container and seal the pouring opening to prevent heat loss and spilling, said dispenser comprising a pump housing (36) which is cylindrical and which defines an interior space (34) having at least one opening (42) in a bottom (41) of said housing (36) enabling, in use, said interior space (34) to communicate with the interior of said container (10), pumping means (18) including a rigid disc member (26) for pumping air from said interior space (34) into said container (10), a closable opening (32) in said pumping means (18) to permit air to enter the interior space (34) of the housing (36), and conduit means (24, 40, 22, 20) for permitting fluid to pass out of the container (10) in response to air pressure created therein as a result of the downward displacement of said pumping means (18) characterised in that said housing (36) defines an interior space (34) serving as an air chamber from which air is displaced and also defines an access opening (35a) extending across the top of the housing (36) for access of the user's finger to said pumping means (18), said pumping means (18) also comprises a rolling diaphragm (28), sealing off the top of said housing interior space (34), said disc member (26) underlying the area of said access opening (35a), said rolling diaphragm (28) having an inner portion (28a) underlying said rigid disc member (26) and movable therewith, an outer peripheral portion (29) attached to the housing (36) and an intermediate portion (28b) connecting said inner portion (28a) with said peripheral portion (29) for movement of the former relative to the latter, said inner portion (28a) of the diaphragm (28) and said disc member (26) being displaceable downwardly within said interior space (34) to evacuate air therefrom by pressure of the user applied by direct contact of the user's finger on the rigid disc member (26), said closable opening (32) being formed in register in said rigid disc member (26) and inner portion (28a) of the flexible diaphragm (28) and located therein so as to be capable of closure by the user's finger during downward strokes of the disc member (26), in use said downward strokes forcing air from said interior space (34) into the container interior via said bottom opening (42) whereas, in use, during upward strokes of the rigid disc member (26) said closable opening (32) is uncovered by removal of the user's finger therefrom to permit air to be drawn into said interior space (34) to recharge the same.

2. A pump dispenser as claimed in Claim 1 wherein said bottom (41) of said housing (36) is provided with means for restricting (44) liquid in the container from entering said pumping means, said restricting means including a gasket (44, 70) normally in a position to restrict liquid from entering said pumping means (18) but flexible to a position permitting air to pass from the pumping means (18) into said container (10) when said pumping means (18) is operated.

3. A pump dispenser as claimed in either Claim 1 or Claim 2 wherein said housing (36) has a plurality of vertically disposed ribs (52) and a plurality of mating grooves (56, 58) on said rigid disc member (26) whereby during displacement of said rigid disc member (26) relative to said housing (36) said member (26) is restrained from twisting or tilting.

4. A pump dispenser as claimed in any one of Claims 1 to 3, wherein said pumping means (18) includes resilient means (30) for moving said rigid disc member (26) upwardly in the absence of any actuation force acting thereon.

5. A pump dispenser as claimed in any one of Claims 1 to 4, wherein said housing (36) includes a downwardly depending member (37) which secures said peripheral portion (29) of the diaphragm (28).

6. A pump dispenser as claimed in any one of Claims 1 to 5, wherein said disc member (26) has a downwardly depending rim at its outer circumference which cooperates with the housing (36) to guide said disc member (26) during its displacement.

## Revendications

1. Distributeur à pompe pour un récipient isolé comportant un orifice d'éjection permettant d'introduire un liquide à l'intérieur du récipient et d'extraire ce liquide, le distributeur à pompe étant adapté de manière à pouvoir s'appliquer d'une manière amovible sur la récipient et à étancher l'orifice d'éjection pour empêcher la perte de chaleur et le déversement du liquide, ce distributeur comprenant une cage de pompe (36) qui est cylindrique et qui définit une chambre intérieure (34) ayant au moins un orifice (42) dans une base (31) de la cage de pompe (36), cet orifice permettant, en cours d'utilisation, à la chambre intérieure (34) de communiquer avec l'intérieur de récipient (10), une pompe (18) comportant une plaquette rigide (26) en forme de disque pour pomper l'air à partir de la chambre intérieure (34) vers et dans le récipient (10), une lumière obturable (32) dans la pompe (18) pour permettre à l'air de pénétrer dans la chambre intérieure (34) de la cage (36), et des conduits (24, 40, 22, 20) pour permettre au fluide de sortir du récipient (10) en réponse á la pression d'air créée dans ce récipient à la suite du déplacement vers le bas de la pompe (18), caractérisé en ce que la cage (36) définit un espace intérieur (34) servant de chambre à air à partir de laquelle l'air est déplacé et elle définit également un orifice d'accès (35a) s'étendant autour de la partie supérieure de la cage (36) pour permettre au doigt de l'utilisateur d'avoir accès à la pompe (18), cette pompe (18) comprend également un diaphragme roulant (28) obturant d'une manière étanche la partie supérieure de la chambre intérieure (34) de la cage, la plaquette en forme de disque (26) see trouvant en dessous de la zone de l'orifice d'accès (35a), le diaphragme roulant (28) ayant une partie interne (28a) située en dessous de la plaquette rigide (26) en forme de disque et se déplaçant avec cette dernière, une partie périphérique externe (29) fixée à la cage (36) et une partie intermédiaire (28b) reliant la partie interne (28a) à la partie périphérique externe (29) de manière à permettre le mouvement de la partie interne (28a) par rapport à la partie externe (29), la partie interne (28a) du diaphragme (28) et la plaquette en forme de disque (26) pouvant être déplacées vers le bas dans la chambre interne (34) afin d'évacuer l'air de cette chambre, sous la pression de l'utilisateur appliquée par contact direct du doigt de l'utilisateur sur la plaquette rigide (26) en forme de disque, la lumière obturable (32) étant réalisée en concordance dans la plaquette rigide (26) en forme de disque et dans la partie interne (28a) du diaphragme flexible (28) et étant située dans ceux-ci de manière à pouvoir être obturée par le doigt de l'utilisateur pendant les courses vers le bas de la plaquette (26) en forme de disque, ces courses vers le bas entraînant, en cours d'utilisation, le forçage de l'air de la chambre intérieure (34) vers et dans l'espace intérieur du récipient, par l'intermédiaire de l'orifice (42) prévu dans la base de la cage tandis que, en cours de fonctionnement, pendant les courses vers le haut de la plaquette rigide (26) en forme de disque la lumière obturable (32) est dégagée par suite de l'enlèvement du doigt de l'utilisateur, ce qui permet à l'air d'être aspiré dans la chambre intérieure (34) afin de recharger celle-ci.

2. Distributeur à pompe suivant la revendication 1, caractérisée en ce que la base (41) de le cage (36) est pourvue de moyens (44) empêchant que le liquide se trouvant dans le récipient ne puisse pénétrer dans la pompe (18), ces moyens comportant un manchon (44, 70) se trouvant normalement dans une position empêchant l'entrée du liquide dans la pompe (18), mais toutefois flexible pour pouvoir passer dans une position permettant à l'air de passer de la pompe (18) vers et dans le récipient (10), lorsque le pompe (18) est actionnée.

3. Distributeur à pompe suivant l'une quelconque des revendications 1 et 2, caractérisé en ce que la cage (36) est munie d'une pluralité de nervures (52) disposées verticalement et le plaquette rigide en forme de disque (26) présente un ensemble correspondant de cannelures (56, 58), si bien que pendant le déplacement de la plaquette rigide en forme de disque (26) par rapport à la cage (36), cette plaquette (26) est empêchée de subir un mouvement de torsion ou de basculement.

4. Distributeur à pompe suivant l'une quelconque des revendications 1 à 3, caractérisé en ce que la pompe (18) comporte un organe élastique (30) pour déplacer le plaquette rigide (26) en forme de disque vers le haut en l'absence de toute force d'actionnement s'exerçant sur cette plaquette.

5. Distributeur à pompe suivant l'une quelconque des revendications 1 à 4, caractérisé en ce que la cage (36) comporte une partie (37) s'étendant vers le bas, laquelle assure la fixation de la partie périphérique (29) de diaphragme (28).

6. Distributeur à pompe suivant l'une quelconque des revendications 1 à 5, caractérisé en ce que la plaquette (26) en forme de disque présente, le long de said circonférence externe, une nervure s'étendant vers le bas, laquelle coopère avec la cage (36) pour guider la plaquette (26) en forme de disque pendant son déplacement.

## Patentansprüche

1. Pumpenabgeber für einen isolierten Behälter mit einer Giessöffnung, durch die Flüssigkeiten in das Behälterinnere hinein und aus dem Behälterinneren heraus gelangen, welcher Pumpenabgeber zum lösbaren Eingriff am Behälter und Abdichten der Giessöffnung und zur Vermeidung von Wärmeverlust und Verschütten von Flüssigkeit ausgebildet ist, wobei der Abgeber umfasst: ein Pumpengehäuse (36), das zylindrisch ist und einen Innerraum (34) begrenzt, der mindestens eine Oeffnung (42) in einem Boden (41) des Gehäuses (36) aufweist, welche bei Verwendung eine Verbindung des Innenraums (34) mit dem Inneren des Behälters (10) ermöglicht, eine Pumpeinrichtung (18) mit einem starren Scheibenteil (26) zum Pumpen von Luft aus dem Innenraum (34) in den Behälter, (10), eine schliessbare Oeffnung (32) in der Pumpeinrichtung (18), um den Eintritt von Luft in den Innenraum (34) des Gehäuses (36) zy gestatten, und Leitungsmittel (24, 40, 22, 20), um den Austritt von Flüssigkeit aus dem Behälter (10) infolge von Luftdruck zu gestatten, der im Behälter als Ergebnis der nach unten gerichteten Verschiebung der Pumpeinrichtung (18) erzeugt wird, dadurch gekennzeichnet, dass das Gehäuse (36) einen als eine Luftkammer dienenden Innenraum (34), aus dem Luft verdrängt wird, und ferner eine Eingriffsöffnung (35a) definiert, die sich über den Oberteil des Gehäuses (36) für den Eingriff des Fingers des Benutzers an der Pumpeinrichtung (18) erstreckt, welche Pumpeinrichtung (18) ferner eine rollende Membran (28), welche den Oberteil des Gehäuseinnenraums (34) abdichtet, wobei der Scheibennteil (26) unter dem Bereich der Eingriffsöffnung (35a) liegt und die rollende Membran (28) einen Innenteil (28a) aufweist, der unter dem starren Scheibenteil (26) liegt und mit diesem beweglich ist, einen am Gehäuse (36) befestigten äusseren Umfangsteil (29) und einen Zwischenteil (28b) besitzt, der den Innenteil (28a) mit dem Umfangsteil (29) zum Bewegen des ersteren relativ zum letzteren verbindet, wobei der Innenteil (28a) der Membran (28) und der Scheibenteil (26) im Innenraum (34) nach unten verschiebbar sind, um daraus Luft durch Druck zu evakuieren, den der Benützer durch direkten Fingerkontakt auf den starren Scheibenteil (26) ausübt, wobei di schliessbare Oeffnung (31) mit dem starren Scheibenteil (26) und dem Innenteil (28a) der flexiblen Membran (28) ausgerichtet und so angeordnet ist, dass sie vom Finger des Benützers bei nach unten gerichteten Bewegungen des Scheibenteils (26) geschlossen werden kann, wobei die nach unten gerichteten Bewegungen bei der Verwendung Luft aus dem Innenraum (34) durch die Bodenöffnung (42) in den Behälter pressen, wohingegen bei der Verwendung bei den nach oben gerichteten Bewegungen des starren Scheibenteils (26) die schliessbare Oeffung (32) durch Abheben des Fingers des Benützers freigegeben wird, um zu ermöglichen, dass Luft in den Innenraum (34) gesaugt wird und diesen wieder füllt.

2. Pumpenabgeber nach Anspruch 1, bei welchem der Boden (41) des Gehäuses (36) Mittel (44) aufweist, die verhindern, dass Flüssigkeit aus dem Behälter in die Pumpeinrichtung eintritt, welche Mittel eine Dichtung (44, 70) aufweisen, die in ihrer normalen Lage verhindert, das Flüssigkeit in die Pumpeinrichtung (18) eintritt, aber in eine Stellung gebogen werden kann, in welcher der Durchlass von Luft aus der Pumpeinrichtung (18) in den Behälter (10) ermöglicht ist, wenn die Pumpeinrichtung (18) betätigt wird.

3. Pumpeinabgeber nach Anspruch 1 oder 2, bei welchem das Gehäuse (36) eine Mehrzahl senkrecht angeordneter Rippen (52) und der starre Scheibenteil (26) eine Mehrzahl dazu passender Nuten (56, 58) Aufweist, so dass beim Verschieben des starren Scheibenteils (26) relative zum Gehäuse (36) der Teil (26) sich nicht verdrehen oder verkanten kann.

4. Pumpenabgeber nach einem der Ansprüche 1 bis 3, bei welchem die Pumpeinrichtung (18) Rückfederungsmittel (30) enthält, um den starren Scheibenteil (26) bei Fehlen einer auf diesen einwirkenden Betätigungskraft nach oben zu bewegen.

5. Pumpenabgeber nach einem der Ansprüche 1 bis 4, bei welchem das Gehäuse (36) einen nach unten abragenden Teil (37) enthält, der den Umfangsbereich (29) der Membran (28) befestigt.

6. Pumpenabgeber nach einem der Ansprüche 1 bis 5, bei welchem der Scheibenteil (26) an seinem Aussenumfang einen sich nach unten erstreckenden Rand aufweist, der mit dem Gehäuse (36) zusammenwirkt, um den scheibenteil (26) während seiner Verlagerung zu führen.

**0 000 093**

FIG. 2

FIG. 1

**FIG.3**

0 000 093

FIG.4

FIG.5

FIG.6

FIG.7

FIG.8

3

0 000 093

FIG. 9

FIG. 10